**Europäisches Patentamt**

**European Patent Office**

**Office européen des brevets**

(19)

(11) Veröffentlichungsnummer : **0 143 872**
**B1**

(12)

# EUROPÄISCHE PATENTSCHRIFT

(45) Veröffentlichungstag der Patentschrift :
30.07.86

(21) Anmeldenummer : 84104521.4

(22) Anmeldetag : 21.04.84

(51) Int. Cl.⁴ : **B 62 D 43/10**, B 62 D 25/08

(54) **Heckbodengruppe für Kraftfahrzeuge.**

(30) Priorität : 23.09.83 DE 3334446

(43) Veröffentlichungstag der Anmeldung :
12.06.85 Patentblatt 85/24

(45) Bekanntmachung des Hinweises auf die Patenterteilung : 30.07.86 Patentblatt 86/31

(84) Benannte Vertragsstaaten :
FR GB IT

(56) Entgegenhaltungen :
DE-A- 2 313 588
DE-A- 2 840 689
FR-A- 2 317 152

(73) Patentinhaber : FORD-WERKE AKTIENGESELLS-
CHAFT
Ottoplatz 2 Postfach 21 03 69
D-5000 Köln 21 (DE)
IT
FORD MOTOR COMPANY LIMITED
Eagle Way
Brentwood Essex CM13 3BW (GB)
GB
FORD FRANCE SOCIETE ANONYME
344 Avenue Napoléon Bonaparte B.P. 307
F-92506 Rueil Malmaison Cedex (FR)
FR
(72) Erfinder : Vogt, Hans
Kielsberg 36
D-5063 Overath (DE)
Erfinder : Kloppe, Herbert
Kornblumenweg 3
D-5024 Pulheim (DE)
Erfinder : Hürten, Oskar
Weissdornweg 130
D-5000 Köln 30 (DE)

(74) Vertreter : Ritzkowsky, Harald, Dipl.-Ing.
Ford-Werke Aktiengesellschaft Patentabteilung
Z/DRR-2 Ottoplatz 2
D-5000 Köln 21 (DE)

EP 0 143 872 B1

## Beschreibung

Die Erfindung geht aus von einer Heckbodengruppe für Kraftfahrzeuge der im Oberbegriff des Patentanspruchs 1 erläuterten Art.

Aus der DE-A-26 21 922 ist eine Anordnung eines Reserverades und eines Kraftstofftanks an der Heckbodengruppe eines Kraftfahrzeuges bekannt, bei der der Kraftstofftank und das Reserverad unterhalb des Bodenbleches angeordnet sind und wobei der Halterungskorb des Reserverades über eine solche Hebelanordnung aufgehängt ist, daß das Reserverad im Fall eines Heckaufpralls nach vorne unter den vor der Hinterachse liegenden Kraftstofftank verlagert wird.

Diese Anordnung ist vom sicherheitstechnischen Aspekt einwandfrei, der für den Haltekorb des Reserverades und dessen Anlenkung erforderliche Bauaufwand ist jedoch verhältnismäßig hoch. Darüberhinaus liegt hierbei das Reserverad immer in einem Bereich in dem es starker Verschmutzung ausgesetzt ist.

Aus der DE-B-28 27 855 ist eine Anordnung des Reserverades in Kraftfahrzeugen, insbesondere Personenkraftfahrzeugen bekannt, bei der das in einer Reserveradmulde im Bodenblech angeordnete Reserverad in Fahrtrichtung schräg nach vorne ansteigend liegend angeordnet ist und zusätzliche Maßnahmen vorgesehen sind, um bei einem Heckaufprall das Reserverad aus seiner Mulde hochsteigen zu lassen, damit der vor diesen angeordneten Kraftstofftank nicht unzulässig verformt wird. Hier ist die Absicherung des Kraftstofftankes zwar gelöst, diese Anordnung ist jedoch nur bei einem ausreichenden Hecküberhang des Fahrzeuges möglich, da ansonsten das bei einem Heckaufprall nach oben in das Fahrzeuginnere hochsteigende Reserverad die Hintersitze einnehmende Fahrzeuginsassen gefährden könnte.

Aus der DE-A-28 40 689 ist eine Heckpartie einer Kraftfahrzeugkarosserie, insbesondere eines Personenkraftwagens bekannt, bei der zum Schutz eines Kraftstofftanks Sollbruch-schlitze im Bereich der Karosserieseitenwände vorgesehen sind, um eine Verformung der Heckpartie des Kraftfahrzeuges im Falle eines Heckaufpralls ohne Kippbewegung nach unten sicherzustellen. Dies ist erforderlich, um einen hinter der Hinterachse liegenden Tank gegen eine Verlagerung nach vorne und Deformierung durch diese Hinterachse zu bewahren.

Die Aufgabe der Erfindung ist es, ausgehend von der zweitgenannten Anordnung des Reserverades in einem Kraftfahrzeug eine Heckbodengruppe der im Oberbegriff des Patentanspruchs 1 erläuterten Art derart zu verbessern, daß mit geringem Aufwand eine Gefährdung von Fahrzeuginsassen im Falle eines Heckaufpralls weder durch ein hochsteigendes Reserverad noch durch eine ungenügende Energieaufnahme der Heckbodengruppe des Kraftfahrzeuges auftritt.

Gemäß der Erfindung wird diese Aufgabe gelöst, indem eine Heckbodengruppe gemäß dem Oberbegriff des Patentanspruchs 1 die in dessen Kennzeichenteil aufgezeigten Merkmale aufweist.

In den Ansprüchen 2 und 3 sind zweckmässige Ausgestaltungen der Erfindung bei unterschiedlichen Anforderungen erläutert.

Dadurch, daß das Bodenblech eine Reserveradmulde aufweist, in der das Reserverad in Fahrtrichtung nach vorne und unten geneigt liegt und seitlich der Reserveradmulde in Fahrzeuglängsrichtung verlaufende Sollbruch-Schlitze angeordnet sind, die z. B. durch Schalldämm-Schmelzfolie abgedeckt sind, wird im Falle eines Heckaufpralls die Reserveradmulde mit dem einen verhältnismäßig hohen Verformungswiderstand aufweisenden Reserverad von den seitlichen Längsträgern entkoppelt, die auf eine erwünschte, energieaufnehmende Verformung hin ausgelegt sind.

Entsprechend den zu berücksichtigenden unterschiedlichen Anforderungen bezüglich eines Heckaufpralls kann die Anordnung so getroffen werden, daß das Reserverad nach einer bestimmten Verlagerung in Fahrtrichtung zur Anlage an den Verdindungsträger einer Verbundlenker-Hinterachse kommt und über diesen die Kräfte in den seitlichen Bereich der Türschweller einleitet.

Bei einem größeren bereitzustellenden Verformungsweg kann es jedoch auch erforderlich sein, an der vorderen Wandung der Reserveradmulde weitere Sollbruch-Schlitze anzubringen, die dafür sorgen, daß das Reserverad soweit nach unten verlagert wird, daß es nicht mehr auf vor ihm liegende Teile einer Hinterachse trifft.

Die Erfindung wird anhand eines in den beiliegenden Zeichnungen gezeigten Ausführungsbeispieles näher erläutert.

Es zeigt :
Figur 1 einen vertikalen Schnitt durch eine Heckbodengruppe gemäß der Erfindung und
Figur 2 eine Teildraufsicht auf die Heckbodengruppe nach Fig. 1.

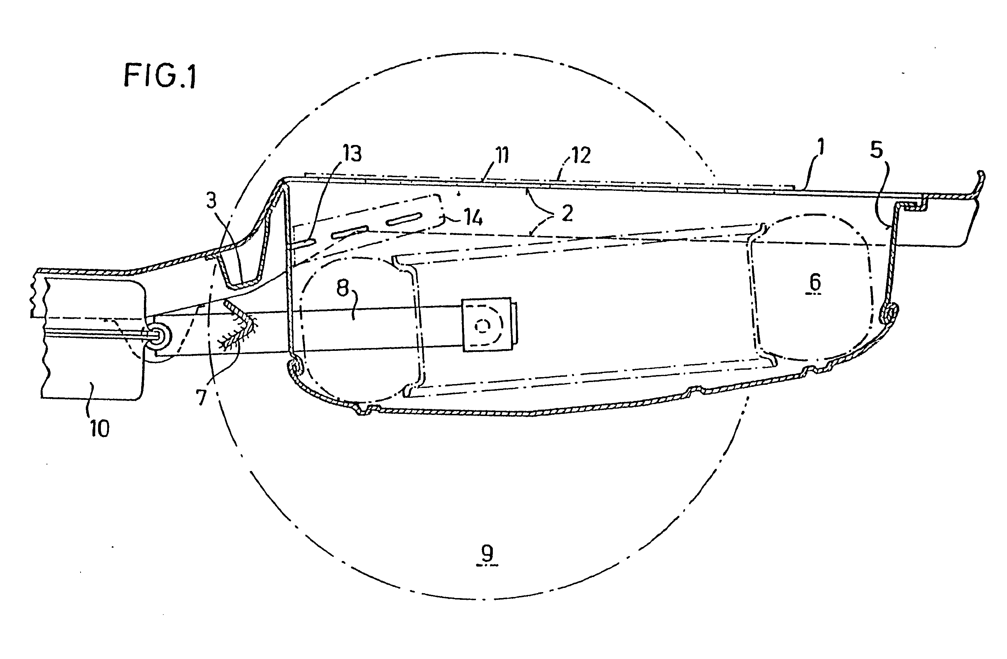

In Fig. 1 ist die Heckbodengruppe eines Kraftfahrzeuges schematisch im Schnitt gezeigt. Unterhalb eines Bodenbleches 1 sind hierbei seitliche kastenförmige Längsträger 2 angeordnet, die im Bereich der Hinterachse über einen Querträger 3 miteinander verbunden sind.

Im Bodenblech 1 ist hierbei eine Reserveradmulde 5 zur Aufnahme des Reserverades 6 ausgebildet.

Vor der Reserveradmulde 5 verläuft ein Verbindungsträger 7 einer Verbundlenker-Hinterachse 8, die die Hinterräder 9 des Kraftfahrzeuges führt.

Vor dem Verbindungsträger 7 der Verbundlenker-Hinterachse 8 ist unterhalb des Bodenbleches 1 und etwa unterhalb der Hintersitze ein Kraftstofftank 10 angeordnet.

Aus Fig. 1 geht hierbei eindeutig hervor, daß die Reserveradmulde 5 derart ausgebildet ist, daß das Reserverad 6 in Fahrtrichtung nach vorne und unten geneigt liegt.

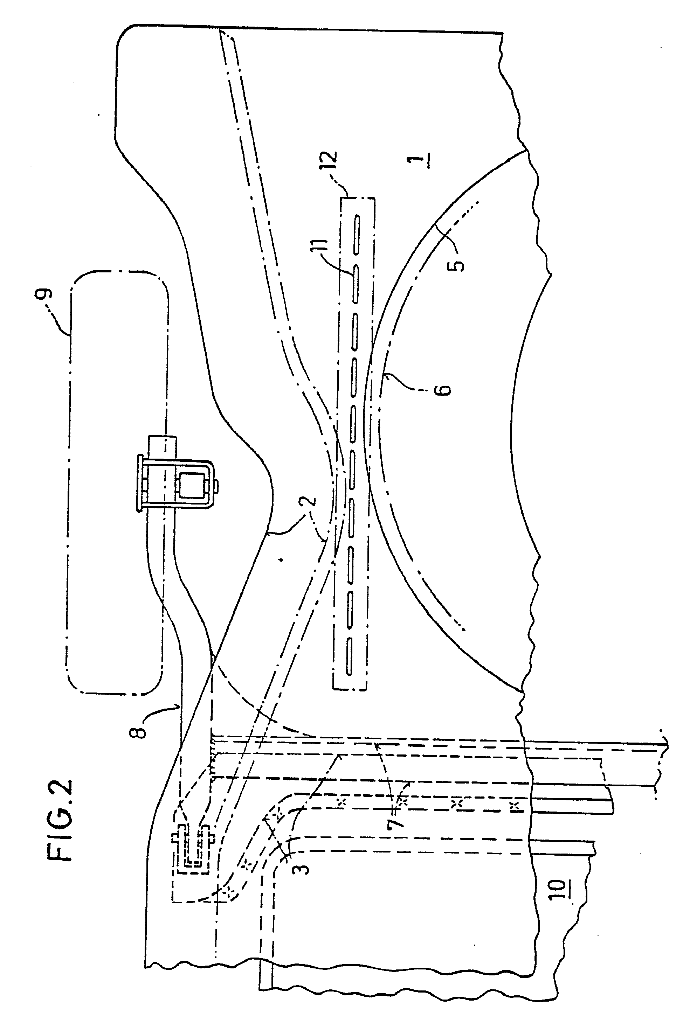

Aus Fig. 2 ist zu ersehen, daß seitlich der Reserveradmulde 5 in Fahrzeuglängsrichtung verlaufende Sollbruch-Schlitze 11 angeordnet sind, die durch Schalldämm-Schmelzfolie 12 abgedeckt sind. Durch diese Sollbruch-Schlitze 11 wird der Bereich des Bodenbleches 1 mit der Reserveradmulde und dem Reserverad 6 kräftemäßig von den seitlichen Längsträgern 2 entkoppelt.

Entsprechend den zu erfüllenden Anforderungen bei unterschiedlichen Vorschriften bezüglich eines Heckaufpralls kann die Auslegung der Heckbodengruppe derart erfolgen, daß sich das Reserverad 6 nach einer bestimmten Verlagerung in Fahrtrichtung an dem vor ihm liegenden Verbindungsträger 7 einer Verbundlenker-Hinterachse 8 abstützt und hierdurch die Kräfte über deren seitliche Lagerpunkte in den Bereich der Türschweller einleitet oder aber das Reserverad durch an der Vorderseite der Reserveradmulde 5 zusätzlich angeordnete Sollbruch-Schlitze 13, die gleichfalls wieder von einer Schalldämm-Schmelzfolie abgedeckt sind, noch weiter derart geschwächt wird, daß das Reserverad an den vor ihm liegenden Teilen einer Verbundlenker-Hinterachse vorbei nach unten geführt wird.

## Patentansprüche

1. Heckbodengruppe für Kraftfahrzeuge mit unterhalb eines Bodenbleches (1) angeordneten und mit diesen verbundenen, seitlichen, kastenförmigen Längsträgern (2), die im Bereich der Hinterachse (7, 8), über einen Querträger (3) miteinander verbunden sind und wobei im Bodenblech (1) eine Reserveradmulde (5) zur Aufnahme des Reserverades (6) ausgebildet ist und der Kraftstofftank (10) vor der Hinterachse angeordnet ist, dadurch gekennzeichnet, daß das Reserverad (6) in der Reserveradmulde (5) in Fahrtrichtung nach vorne und unten geneigt liegt und seitlich der Reserveradmulde (5) in Fahrzeuglängsrichtung verlaufende Sollbruch-Schlitze (11) angeordnet sind, die z. B. durch Schalldämm-Schmelzfolie (12) abgedeckt sind.

2. Heckbodengruppe nach Anspruch 1 für einen Heckaufprall mit geringerer Geschwindigkeit, dadurch gekennzeichnet, daß die Neigung und die Sollbruch-Schlitze derart ausgelegt sind, daß das Reserverad (6) nach einer bestimmten Verlagerung in Fahrtrichtung zur Anlage an den Verbindungsträger (7) einer Verbundlenker-Hinterachse (8) kommt und die Kräfte über dessen seitliche Lagerpunkte in den Bereich der Türschweller einleitet.

3. Heckbodengruppe nach Anspruch 1 für einen Heckaufprall bei höherer Geschwindigkeit, dadurch gekennzeichnet, daß die Neigung und die Sollbruch-Schlitze (11) und zusätzliche Sollbruch-Schlitze (13) so ausgelegt sind, daß sich das Reserverad (6) bei einer Verlagerung in Fahrtrichtung soweit nach unten bewegt, daß es an vor ihm angeordneten Bauteilen einer Verbundlenker-Hinterachse (7, 8) vorbei nach unten verlagert wird.

## Claims

1. A rear floor assembly for motor vehicles with lateral box beams (2) disposed underneath a floor plate (1), connected therewith and interconnected in the region of the rear axle (7/8) by a cross member (3), a spare wheel recess (5) being formed in the floor plate (1) for receiving the spare wheel (6) and the fuel tank (10) being disposed in front of the rear axle, characterized in that the spare wheel (6) lies in the spare wheel recess (5) tilted forward in the direction of travel and downward, and that rated breaking slots (11) covered, e. g., with sound-insulating meltable foil (12) are arranged alongside the spare wheel recess (5) in the lengthwise direction of the vehicle.

2. A rear floor assembly according to claim 1 for a rear impact at low speed, characterized in that the tilt and the rated breaking slots are arranged so that the spare wheel (6), after having been displaced to a certain extent in the direction of travel, abuts against the connecting bar (7) of an interconnected-linkage rear axle (7/8) and transmits the forces via the lateral bearing points of the connecting bar into the region of the door rocker members.

3. A rear floor assembly according to claim 1 for a rear impact at higher speed, characterized in that the tilt, the rated breaking slots (11) and additional breaking slots (13) are arranged so that the spare wheel (6), while being displaced in the direction of travel, moves downward to such an extent that it is displaced downward past the components of an interconnected-linkage rear axle (7/8) located in front of it.

## Revendications

1. Ensemble de plancher arrière de véhicules automobiles comportant, au-dessous d'une tôle de fond (1), des longerons (3) latéraux en forme de caisse, reliés à celle-ci, lesquels sont assemblés entre eux au niveau de l'essieu arrière (8) par une traverse (3), et dans lequel un logement de roue de secours (5) est pratiqué dans la tôle de fond (1) destiné à recevoir la roue de secours (6), et le réservoir de carburant (10) est situé à l'avant de l'essieu arrière, caractérisé en ce que la roue de secours (6) repose dans le logement (5) inclinée dans le sens de la marche vers l'avant et vers le bas et en ce que des fentes de rupture (11) sont pratiquées sur le côté du logement de la roue de secours (5) dans le sens de la longueur du véhicule, recouvertes par exemple d'une feuille fusible d'isolation phonique (12).

2. Ensemble de plancher arrière selon la revendication 1, pour une collision arrière à vitesse réduite, caractérisé en ce que l'inclinaison et les fentes de rupture sont conçues en sorte que la roue de secours (6), après un certain déplacement dans le sens de la marche, vienne buter contre la poutre de liaison (7) d'un essieu arrière

3

(8) et transmette les efforts dans la zone du seuil des portières par ses points d'appui latéraux.

3. Ensemble de plancher arrière selon la revendication 1, pour une collision arrière à grande vitesse, caractérisé en ce que l'inclinaison et les fentes de rupture (11) ainsi que les fentes de rupture supplémentaires (13) sont conçues en sorte que la roue de secours (6) en se déplaçant dans le sens de la marche, s'abaisse pour se trouver déplacée vers le bas, au-delà d'éléments de construction, disposés devant elle, d'un essieu arrière (8).

**FIG.1**

# FIG.2

0 143 872